# EUROPÄISCHE PATENTSCHRIFT

(11) **EP 0 347 555 B1**
(45) Veröffentlichungstag und Bekanntmachung des Hinweises auf die Patenterteilung: **21.07.1993**
(21) Anmeldenummer: 89107412.2
(22) Anmeldetag: 25.04.1989
(51) Int. Cl.: F16J 3/02, B60T 11/34

(54) **Einfach wirkender Arbeitszylinder, insbesondere für einen Bremskraftregler**
Single-acting working cylinder for a brake power adjuster
Cylindre de travail à simple effet pour régulateur de freinage

(30) Priorität: 20.05.1988 DE 3817208
(43) Veröffentlichungstag der Anmeldung: 27.12.1989
(73) Patentinhaber: ALFRED TEVES GmbH, 60441 Frankfurt (DE)
(72) Erfinder: Schonlau, Jürgen, D-6229 Walluf (DE); Harth, Ralf, D-6370 Oberursel (DE)
(74) Vertreter: Portwich, Peter

(56) Entgegenhaltungen:
- EP-A- 0 166 630
- DE-A- 2 010 446
- DE-A- 3 643 925
- GB-A- 2 188 700
- Bremsenhandbuch, 9. Aufl., Bartsch Verlag, Ottobrunn bei München, Alfred Teves GmbH, Seiten 223-259

## Beschreibung

Die Erfindung geht aus von einem Arbeitszylinder der im Oberbegriff des Hauptanspruchs beschriebenen Gattung.

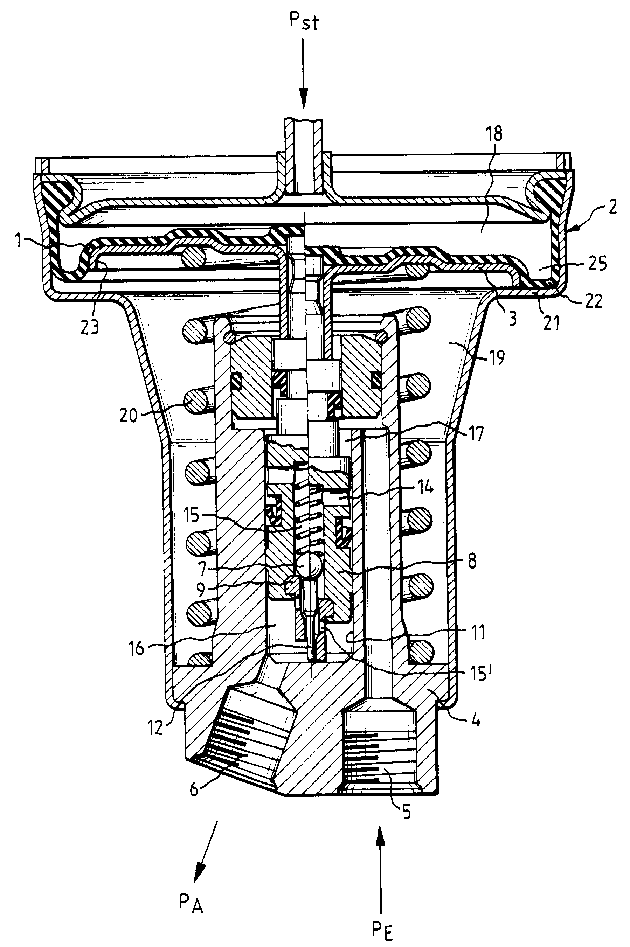

Die Aufgabe und Wirkungsweise von Bremskraftreglern ist in dem Bremsenhandbuch, 9. Auflage, erschienen im Bartsch-Verlag, Ottobrunn bei München, 1986, auf den Seiten 223 bis 259, recht ausführlich dargestellt. Dabei ist insbesondere auf den Seiten 240, 241 ein lastabhängiger Regler (Fig. 37) und sein prinzipieller Einbau in ein Kraftfahrzeug dargestellt. Daraus ist zu entnehmen, daß die der Belastung der Hinterachse entsprechende auf den Regler in Öffnungsrichtung einwirkende Steuerkraft ständig wirksam ist, unabhängig davon, ob nun die Bremse betätigt und ein entsprechender Bremsendruck ausgeübt wird oder nicht.

In der EP-A-0 166 630 ist ein vergleichbarer Bremskraftregler gezeigt, welcher statt über einen federbelasteten Hebel mittels eines Druckmittels (hydraulisch) gesteuert wird. Dazu wird ein gattungsgemäßer Arbeitszylinder verwendet. Der lastabhängige hydraulische Druck wird dabei über einen tellerförmigen Kolben aufgebracht, welcher mittels einer Rollmembran dichtend im Gehäuse des Arbeitszylinders geführt ist.

Derartige, insbesondere bei großen Kolbenflächen verwendete Rollmembranen sollen zum einen zum Erzielen einer leichten Biegbarkeit verhältnismäßig dünn sein und bestehen aus Gummi oder Kunststoff, der einen Durchtritt des Druckmittels verhindert. Andererseits werden die Rollmembranen mit einem relativ hohen Druck, wie weiter oben schon erläutert, dauerhaft beaufschlagt. Um hier ein Ausdehnen oder Reißen der Membran zu verhindern, kann die Membran mit einer Gewebeverstärkung versehen werden. Eine derartige Verstärkung führt aber zu einem größeren Herstellungsaufwand, der die Membran wesentlich verteuert.

Verwendet man aber eine einfache Membran aus Polyesterkautschuk, so ist eine derartige Membran um 80% billiger als eine mit Gewebe verstärkte. Bei dem in dem Bremskraftregler auftretenden hohen Dauerdruck hat das bekannte Material allerdings den Nachteil, eine hohe Kriechtätigung aufzuweisen, was in dem Membranrollbereich zu einer erhöhten Dehnung und damit zu einem Auswandern des Materials aus dem vorgeschriebenen Grenzwert führt. Ein Ausweichen auf eine härtere Materialmischung und die Verwendung größerer Randdicken für die Membran bilden keinen gangbaren Weg, da hierdurch nicht die gewünschte Elastizität der Membran sowie die erforderliche Biegewechselfestigkeit erreicht wird.

Die Erfindung hat sich zur Aufgabe gestellt, einen Arbeitszylinder der o.g. Gattung derart auszugestalten, daß trotz einer ständigen Druckbelastung der Membran in Ruhestellung des Tellerkolbens und der Verwendung eines preiswerten Membranmaterials keine erhöhte Dehnung im Membranrollbereich auftritt.

Die Aufgabe wird durch die in dem kennzeichnenden Teil des Hauptanspruchs aufgeführte Merkmalskombination gelöst. Die Erfindung besteht im Prinzip also darin dafür zu sorgen, daß in der druckbelasteten Ruhestellung des Tellerkolbens der zwischen Tellerkolben und Mantelfläche des Arbeitszylinders liegende dichtende Bereich der Rollmembran an einer gehäusefesten Anlage anliegt, wodurch dieser Bereich gegen Zug entlastet und gegen den auf ihn wirkenden Druck abgestützt ist. Die Membran wird also nur während der Arbeitszeiten mit einer sie dehnenden Kraft beaufschlagt, was besonders dann die Lebensdauer der Membran verlängert, wenn, wie üblich, die Ruhezeiten die Arbeitszeiten weit überwiegen.

Eine besonders zweckmäßige Arbeitsweise für die Erfindung ist durch eine Merkmalskombination nach Anspruch 2 gegeben, da hier die Lebensdauer verlängernden Ruhezeiten die kurzen Regelzeiten, in dem der Bremsdruck des Hinterrades des Kraftfahrzeuges abgesenkt werden muß, weit überwiegen.

Durch die Anwendung der Merkmalskombination nach Anspruch 3 läßt sich eine zusätzliche Entlastung für die Rollmembran erreichen, wobei gleichzeitig auch der gehäusefeste Anschlag doppelt ausgenutzt werden kann.

Für den Aufbau des Anschlags ergibt sich eine besonders einfache Ausgestaltung durch Anwendung der Merkmalskombination nach Anspruch 4, durch welche ein Gehäuseteil des Arbeitszylinders gleichzeitig als Anschlag mit ausgenutzt wird.

Um einen für die Abstützung des in Ruhestellung zu schützenden Teils der Rollmembran hinreichenden Raum zu schaffen, empfiehlt sich in Weiterbildung der Erfindung eine Merkmalskombination nach Anspruch 5.

Soweit die Membran auf das Regelventil eines Bremskraftreglers einwirkt, läßt sich die rückstellende Federkraft für den Regler besonders genau durch Verwendung einer Merkmalskombination nach Anspruch 6 einstellen.

Ein Ausführungsbeispiel der Erfindung wird nachfolgend anhand der Zeichung erläutert. Dabei werden nur die im Zusammenhang mit der Erfindung wesentlichen Bauteile eines Bremskraftreglers beschrieben. In das Gehäuse 2 eines Bremskraftreglers ist ein Ventilgehäuse 4 eingesetzt, welches eine Eingangsöffnung 5 und eine Ausgangsöffnung 6 trägt. Das Ventil hat nun die Aufgabe, den von dem Bremsdruck der Vorderräder abgeleiteten Eingangsdruck PE in einen für das Bremsen der Hinterräder geeigneten Ausgangsdruck PA umzuformen, wobei vermieden werden soll, daß die aufgrund des Bremseffektes und des geringeren Auflagegewichtes weniger belasteten Hinterräder blockieren können. Es muß also dafür gesorgt werden, daß ab einem bestimmten Druck trotz steigendem Druckes PE der Bremdruck der Hinterräder nicht mehr oder nur weniger stark ansteigen kann.

Hierzu dient die Wirkung des kugelförmigen Ventilkörpers 7, der mit Federkraft innerhalb eines Ventileinsatzes 8 auf einen Ventilsitz 9 gedrückt wird. In der Zeichnung ist links von der Symmetrieebene der Ventileinsatz 8 im geschlossenen Zustand des Ventils dargestellt, während rechts von der Symmetrielinie der Ventileinsatz 8 geöffnet dargestellt ist.

Wie aus der Zeichnung zu entnehmen, öffnet das Ventil durch eine in der Zeichnung erkennbare Abwärtsbewegung des Ventileinsatzes in der Aufnahmebohrung 11 des Ventilkörpers 4, wobei über einen Stößel 12 der Ventilkörper 7 von seinem Ventilsitz 9 abgehoben wird. In diesem Falle kann über den Einlaßkanal 14, die Ventilöffnung 15 und den Auslaßkanal 15' der Eingangsdruck PE zu der Ausgangsöffnung 6 gelangen, so daß der Eingangsdruck PE gleich dem Ausgangsdruck PA ist.

Wächst nun der Druck PA in dem Schließraum 16 immer mehr an, so wird durch diesen Druck der Ventileinsatz 8 immer mehr angehoben, da die Angriffsfläche des Drucks PE in dem Öffnungsraum 17 sehr viel geringer ist als die Angriffsfläche in dem Schließraum 16. Damit beginnt sich, wie in der linken Hälfte der Zeichnung gezeigt, der Stößel 12 gegenüber dem Ventileinsatz 8 immer mehr zu senken, bis schließlich der Ventilkörper 7 auf dem Ventilsitz 9 aufsitzt. Reicht aufgrund eines sinkenden PA oder eines steigenden PE die Kraft zum Schließen des Ventils nicht mehr aus, so wird zum Öffnen des Ventils der Ausgangsdruck PA im Verhältnis der druckwirksamen Flächen des Öffnungsraums 17 gegenüber dem Schließraum 16 nachgestellt, bis die Kräfte wieder ausgeglichen sind und das Ventil schließt.

Die Zeichnung zeigt nun die Möglichkeit, die Regelung des Ausgangsdrucks PA vom Eingangsdruck PE von einem Steuerdruck Pₛₜ abhängig zu machen, wobei dieser hydraulische Steuerdruck von der Belastung der Hinterachse abhängt. Da der Steuerdruck die Wirkung des Drucks in dem Öffnungsraum 17 unterstützt, ist er so eingestellt, daß er mit wachsender Belastung der Hinterachse wächst, da in diesem Falle auch die Blockierung des Hinterrades erst bei einem größeren Bremsdruck einsetzt. Im einzelnen ist zu erkennen, wie der Steuerdruck Pₛₜ in eine Arbeitskammer 18 geleitet wird, wo er einen Tellerkolben 3 beaufschlagt, der in Öffnungsrichtung des Ventils den Ventileinsatz 8 beaufschlagt. Der im wesentlichen zylinderförmige Arbeitsraum ist von dem Restraum 19 des Zylinders durch eine Rollmembran 1 abgedichtet, welche auf dem Tellerkolben 3 aufliegt.

In der Praxis ist es nun so, daß der Arbeitsraum 18 mit einem weitgehend konstanten, von der Belastung der Hinterachse abhängigen Steuerduck Pₛₜ belastet ist, welcher in Öffnungsrichtung des Ventils wirkt. Da in normalem, bremsfreien Zustand der Bremsdruck P_{E} 0 ist, wirkt dem Druck Pₛₜ nur die Kraft der Rückholfeder 20 entgegen, so daß das Ventil geöffnet bleibt.

Erst in dem Fall, daß der Ausgangsdruck P_{A} einen gewissen Betrag überschreitet, wird der Ventileinsatz 8 und damit der Tellerkolben 3, wie auf der linken Seite der Zeichnung zu sehen, nach oben geschoben. Damit wird die Funktion der Anlagefläche 21 des Reglergehäuses 2 verständlich, gegen die sich der ringförmige Membranteil 22 im Normalzustand des Reglers abstützt. Es liegt somit, wie aus der rechten Hälfte der Zeichnung zu erkennen, im Normalzustand die Rollmembran über ihre gesamte Fläche am Gehäuse 2 bzw. deren Anlagefläche 21 sowie dem Tellerkolben 3 an.

Erst im Regelfall, bei dem das Ventil zu schließen beginnt, hebt, wie auf der linken Seite der Zeichung zu erkennen, der Tellerkolben 3 nach oben ab, so daß jetzt der ringförmige Membranteil 22 den ihn dehnenden Druck Pₛₜ aufnehmen und diesem widerstehen muß. Diese Regelzeiten sind aber im Vergleich zu der Ruhezeit des Reglers vernachlässigbar gering.

In der Zeichnung ist noch ein ringförmiger Ansatz 23 zu erkennen, welcher sich im Normalzustand an der Anlagefläche 21 des Gehäuses 2 abstützt und hierdurch einen hinreichenden Anlageraum für den im Ruhezustand zusätzlich abzustützenden Membranteil bildet.

## Patentansprüche

1. Einfach wirkender Arbeitszylinder bestehend aus einem Gehäuse (2) mit einem darin angeordneten Tellerkolben (3), der durch eine Rollmembran (1) gegenüber dem Gehäuse (2) abgedichtet und durch einen Steuerdruck (Pₛₜ) in seine ausgefahrene Endstellung verschiebbar ist, insbesondere für einen hydraulisch gesteuerten Bremskraftregler mit einem Ventil (7-12), welches in Abhängigkeit eines Eingangsdrucks (P_{E}) die Höhe eines Ausgangsdrucks (P_{A}) regelt, wobei der Ausgangsdruck (P_{A}) zusätzlich vom Steuerdruck (Pₛₜ) abhängt, der über den mit der Rollmembran (1) abgedichteten Tellerkolben (3) das Regelventil (7-12) Öffnungsstellung zu bringen versucht, dadurch **gekennzeichnet,** daß der Tellerkolben (3) und das Gehäuse (2) so ausgestaltet sind, daß sich die Rollmembran (1) in der ausgefahrenen Endstellung des Tellerkolbens (3) mit ihrem sich im wesentlichen in radialer Richtung erstreckenden und nicht durch den Tellerkolben abgestützten ringförmigen Teil (22) gegen eine gehäusefeste Anlage (21) abstützt.

2. Arbeitszylinder nach Anspruch 1, dadurch **gekennzeichnet,** daß auch der Tellerkolben (3) in Wirkungsrichtung des Steuerdrucks (Pₛₜ) gegen einen gehäusefesten Anschlag (21) abgestützt ist.

3. Arbeitszylinder nach Anspruch 1 oder 2, dadurch **gekennzeichnet,** daß die Anlage für die Rollmembran (1) und/oder den Tellerkolben (3) durch einen sich in radialer Richtung erstreckenden ringförmigen Gehäuseteil (21) des Arbeitszylinders (18,19) gebildet ist.

4. Arbeitszylinder nach einem der Ansprüche 1 bis 3, dadurch **gekennzeichnet,** daß der äußere Rand des Tellerkolbens (3) mit einem sich in axialer Richtung erstreckenden ringförmig umlaufenden Ansatz (23) versehen ist, der den Tellerkolben (3) in der ausgefahrenen Endstellung in Abstand gegenüber dem Anschlag hält.

5. Arbeitszylinder nach einem der Ansprüche 1 bis 4, dadurch **gekennzeichnet,** daß der Tellerkolben (3) auf das Regelventil (7-12) eines Bremskraftreglers einwirkt und die ausgefahrene Endstellung des Tellerkolbens (3) der Öffnungsstellung des Regelventils entspricht.

6. Arbeitszylinder nach Anspruch 5, dadurch **gekennzeichnet,** daß eine den Tellerkolben (3) entgegen der Wirkungsrichtung des Steuerdrucks (Pₛₜ) stellende Rückstellfeder des Reglers sich am Boden des Arbeitszylinders (18,19) abstützt, in den das von der Rückstellfeder (20) spiralförmig umgebene Steuerventil des Reglers (7-12) ragt.

## Claims

1. A simply acting working cylinder comprised of a housing (2) accommodating a plate-shaped piston (3) which is sealed by a rolling diaphragm (1) relative to the housing (2) and which is slidable into its displaced end position by a control pressure (Pₛₜ), in particular for a hydraulically controlled braking-force control device with a valve (7 to 12) controlling the level of an output pressure (P_{A}) in dependence on an input pressure (P_{E}), the output pressure (P_{A}) additionally depending on the control pressure (Pₛₜ) which, via the plate-shaped piston (3) sealed by the rolling diaphragm (1), seeks to cause the control valve (7 to 12) to adopt its opening position,
**characterized** in that the plate-shaped piston (3) and the housing (2) are designed such as to ensure that, in the displaced end position of the plate-shaped piston (3), the rolling diaphragm (1) with its annular part (22) takes support on a stop (21) formed fast with the housing, which annular part essentially extends in the radial direction and is not supported by the plate-shaped piston.

2. A working cylinder as claimed in claim 1,
**characterized** in that, in the direction of action of the control pressure (Pₛₜ), the plate-shaped piston (3) is also supported on a stop (21) formed fast with the housing.

3. A working cylinder as claimed in claim 1 or 2,
**characterized** in that the stop for the rolling diaphragm (1) and/or the plate-shaped piston (3) is formed by an annular housing part (21) of the working cylinder (18, 19), which part extends in the radial direction.

4. A working cylinder as claimed in any one of the claims 1 or 3,
**characterized** in that the outer edge of the plate-shaped piston (3) is provided with an annularly surrounding projection (23) which extends in the axial direction and keeps the plate-shaped piston (3) at a distance from the stop in the displaced end position.

5. A working cylinder as claimed in any one of the claims 1 or 4,
**characterized** in that the plate-shaped piston (3) acts on the control valve (7 to 12) of a brake force control device, and in that the displaced end position of the plate-shaped piston (3) corresponds to the opening position of the control valve.

6. A working cylinder as claimed in claim 5,
**characterized** in that a return spring of the control device, acting on the plate-shaped piston (3) against the direction of action of the control pressure (Pₛₜ), takes support on the bottom of the working cylinder (18, 19) into which the control valve of the control device (7 to 12) projects, which control valve is helically surrounded by the return spring (20).

## Revendications

1. Vérin à fluide à simple effet, constitué d'un boîtier (2) dans lequel est disposé un piston en forme de plateau (3) dont l'étanchéité vis-à-vis du boîtier (2) est assurée par une membrane à déroulement (1) et qui est agencé de façon à pouvoir être déplacé à sa position déployée extrême sous l'action d'une pression de commande ((Pₛₜ), notamment pour régulateur d'effort de freinage à commande hydraulique comportant une valve (7-12) qui assure la régulation de la valeur d'une pression de sortie (P_{A}) en fonction d'une pression d'entrée (P_{E}), cette pression de sortie (P_{A}) dépendant en outre de la pression de commande (Pₛₜ) qui a tendance à amener la valve de régulation (7-12) en position d'ouverture par l'intermédiaire du piston en forme de plateau (3) dont l'étanchéité est assurée par la membrane à déroulement (1), caractérisé en ce que le piston en forme de plateau (3) et le boîtier (2) sont agencés de façon telle que, dans la position déployée extrême du piston en forme de plateau (3), la membrane à déroulement (1) est soutenue, par sa partie annulaire (22) qui s'étend essentiellement selon la direction radiale et qui n'est pas soutenue par le piston en forme de plateau, par un appui (21) fixe vis-à-vis du boîtier.

2. Vérin à fluide suivant la revendication 1, caractérisé en ce que le piston en forme de plateau (3) est aussi soutenu, dans la direction d'action de la pression de commande (Pₛₜ), par un appui (21) fixe vis-à-vis du boîtier.

3. Vérin à fluide suivant la revendication 1 ou 2, caractérisé en ce que l'appui prévu pour la membrane à déroulement (1) et/ou le piston en forme de plateau (3) est formé par une partie annulaire (21) du boîtier du vérin à fluide (18,19) qui s'étend selon la direction radiale.

4. Vérin à fluide suivant l'une des revendications 1 à 3, caractérisé en ce que le bord extérieur du piston en forme de plateau (3) est pourvu d'un rebord annulaire qui en fait le tour et s'étend selon la direction axiale et qui maintient le piston en forme de plateau (3), dans sa position déployée extrême, à distance de l'appui.

5. Vérin à fluide suivant l'une des revendications 1 à 4, caractérisé en ce que le piston en forme de plateau (3) agit sur la valve de régulation (7-12) d'un régulateur d'effort de freinage et en ce que la position déployée extrême du piston en forme de plateau (3) correspond à la position ouverte de la valve de régulation.

6. Vérin à fluide suivant la revendication 5, caractérisé en ce qu'un ressort de rappel du régulateur, qui repousse le piston en forme de plateau (3) dans le sens opposé au sens d'action de la pression de commande (Pₛₜ) prend appui sur le fond du cylindre (18, 19) du vérin sur lequel fait saillie la valve de commande du régulateur (7-12) qui est entourée en spirale par le ressort de rappel (20).
